# EUROPÄISCHE PATENTSCHRIFT

(11) **EP 0 552 681 B1**
(45) Veröffentlichungstag und Bekanntmachung des Hinweises auf die Patenterteilung: **03.06.1998**
(21) Anmeldenummer: 93100566.4
(22) Anmeldetag: 15.01.1993
(51) Int. Cl.: C08L 23/12, C08L 23/10

(54) **Schlagzähe Polyolefin-Formmasse**
Impact resistant polyolefine molding composition
Composition de polyoléfines résistant à l'impact

(30) Priorität: 18.01.1992 DE 4201191
(43) Veröffentlichungstag der Anmeldung: 28.07.1993
(73) Patentinhaber: TARGOR GmbH, 55116 Mainz (DE)
(72) Erfinder: Winter, Andreas, Dr., W-6246 Glashütten/Ts. (DE); Bachmann, Bernd, Dr., W-6239 Eppstein/Ts. (DE); Dolle, Volker, Dr., W-6140 Bensheim (DE)

(56) Entgegenhaltungen:
- EP-A- 0 336 128
- EP-A- 0 400 333
- EP-A- 0 433 990
- DE-A- 2 642 053
- US-A- 3 700 614
- US-A- 4 395 519
- DATABASE WPIL Derwent Publications Ltd., London, GB; AN 81-41032D
- DATABASE WPIL Derwent Publications Ltd., London, GB; AN 81-63325D

## Beschreibung

Die Erfindung bezieht sich auf eine auch bei tiefen Temperaturen hochschlagzähe Polyolefinformmasse hoher Härte aus einem isotaktischen Olefinhomopolymer und/oder Olefincopolymer und einem Kautschuk.

Schlagzähe Polyolefinformmassen sind im Prinzip bekannt. Sie werden hergestellt durch Schmelzmischen von beispielsweise Polypropylen und einem Kautschuk, wie z. B. Ethylen-Propylen-Kautschuk (EPM) oder Ethylen-Propylen-Dien-Kautschuk (EPDM) (Angew. Makromol. Chem. 185/186 (1991) 97; Polymer, 28 (1987) 47).

Entsprechend dem Stand der Technik besteht das verwendete Polypropylen zu mindestens 2 - 10 Gew.-% aus ataktischem Polypropylen (APP) und zu 90 - 98 % aus Polypropylenketten stark unterschiedlicher Kettenlänge (M_{w}/Mₙ = 5 - 10).

Alternativ wird als Polypropylenkomponente auch ein Propylencopolymer verwendet, das neben APP, Polypropylenketten und Polymerketten des Comonomers mit oben beschriebenem Aufbau noch Propylen-Copolymer-Ketten enthält, die unterschiedliche Copolymergehalte und ebenfalls unterschiedliche Kettenlängen aufweisen.

Darüberhinaus sind auch sogenannte Reaktorblends bekannt. Diese setzen sich aus APP, Polypropylen und Polymeren des Comonomers unterschiedlicher Kettenlänge sowie aus Propylen-Comonomer-Ketten unterschiedlicher Kettenlänge und Comonomergehalten zusammen. Ihre Herstellung erfolgt in einem oder mehreren Polymerisationsschritten direkt im Polymerisationsreaktor.

Allen diesen Formmassen ist gemeinsam, daß sie bei der gewünschten hohen Schlagzähigkeit nur eine unbefriedigende Steifheit/Härte aufweisen.

Aus US-A-4,395,519 ist eine Polymerzusammensetzung bekannt, die aus einem kristallinen Polypropylen, einem statistischen Propylen/Ethylen Copolymer und einem Polyethylen besteht. Das kristalline Polypropylen wird mit einem Katalysator hergestellt, der als Komponente eine Titanverbindung enthält. Die Titanverbindung ist eine Titantrihalogenidverbindung.

Aus JP-A-56041237 ist ein Polyolefin bekannt, das ein Propylenhomopolymer und/oder ein statistisches Propylencopolymer und ein Polyethylen mit hoher Dichte enthält. Es kann auch ein Kautschuk zugefügt werden, um die Zähigkeit zu erhöhen.

Es bestand somit die Aufgabe, eine Formmasse zu finden, die die aus dem Stand aer Technik bekannten nachteiligen Eigenschaften nicht aufweist.

Überraschenderweise wurde nun gefunden, daß bei Verwendung von Polymeren und Copolymeren, die frei von ataktischen Polymerketten (ataktischem Polyolefin; APO genannt) sind und eine einheitliche Molekulargewichtsverteilung aufweisen (M_{w}/Mₙ bevorzugt kleiner 5), die obengenannten Nachteile vermieden werden können.

Die Erfindung betrifft somit eine Polyolefinformmasse, im wesentlichen bestehend aus 20 bis 99 Gew.-%, bezogen auf die Formmasse, eines isotaktischen Polyolefins, das keine ataktischen Polymerketten enthält, und 1 bis 80 Gew.-%, bezogen auf die Formmasse, eines Kautschuks mit einer Glastemperatur unter -20° C.

Das zur Herstellung der erfindungsgemäßen Polyolefinformmasse zu verwendende APO-freie, isotaktische Polyolefin ist ein Polymer mit enger Molmassenverteilung M_{w}/Mₙ < 5, bevorzugt < 3,5, und einheitlichem Kettenaufbau. Unter einheitlichem Kettenaufbau wird eine statistische Verteilung von Baufehlern und/oder Comonomeren in der Polymerkette verstanden.

Unter APO-freien isotaktischen Polyolefinen sind solche Polyolefine zu verstehen, die im wesentlichen keine ataktischen Polymerketten enthalten. Es handelt sich hierbei um Produkte (Homo- und Copolymere), die unter Verwendung hochstereospezifischer Metallocen/Aluminoxan-Katalysatorsysteme hergestellt werden. Entsprechende Verfahren sind bekannt und z. B. in EP-A 302 424, EP-A 336 127, EP-A 336 128 und DE-P 40 35 886.0 beschrieben. Die nach den genannten Verfahren hergestellten isotaktischen Polyolefine enthalten keine oder lediglich sehr geringe Anteile an ataktischen Polymerketten. In der Regel beträgt dieser Anteil weniger als 1 Gew.-%.

Grundsätzlich ist es auch möglich, Polyolefine, die mit konventionellen Ziegler-Katalysatoren (MgCl₂/TiCl₄/Elektronendonor/AlEt₃) hergestellt wurden und merkliche APO-Anteile enthalten, durch Extraktion der APO-Anteile mit einem Kohlenwasserstoff in APO-freie und damit erfindungsgemäße Polyolefine zu überführen. Aufgrund des damit verbundenen aufwendigen Verfahrens, d. h. aus Kostengründen, ist ein solches Vorgehen jedoch wenig sinnvoll.

Das erfindungsgemäß zu verwendende isotaktische Polyolefin ist vorzugsweise ein Olefinhomopolymer mit einer Molmassenverteilung M_{w}/Mₙ ≺ 5, bevorzugt < 3,5, und einem Isotaxieindex (II) von mindestens 85 % oder ein Olefincopolymer mit M_{w}/Mₙ ≺ 5, bevorzugt < 3,5, und einem Isotaxieindex von mindestens 85 %, oder das Polyolefin setzt sich aus einem Olefinhomopolymer und einem Olefincopolymer zusammen, wobei der Isotaxieindex mindestens 85 % beträgt und M_{w}/Mₙ der Komponenten ≺ 5, bevorzugt < 3,5, ist. Das isotaktische Polyolefin enthält keine a taktischen Polymerketten.

Ist das Olefinpolymer ein Olefinhomopolymer, so besteht es aus Einheiten eines Olefins mit mindestens 3 C-Atomen der Formel R^{a}-CH=CH-R^{b}, worin R^{a} und R^{b} gleich oder verschieden sind und ein Wasserstoffatom oder einen Alkylrest mit 1 bis 10, vorzugsweise 1 bis 6 C-Atomen bedeuten, oder R^{a} und R^{b} mit den sie verbindenden C-Atomen einen Ring mit 4 bis 22 C-Atomen bilden. Bevorzugte Olefine sind Propylen, Buten-1, 4-Methyl-1-penten, Hexen-1, Penten und Norbornen. Besonders bevorzugt ist Propylen, d. h. die erfindungsgemäße Formmasse enthält insbesondere Polypropylen.

Ist das Olefinpolymer ein Olefincopolymer, so besteht es zu 99,5 bis 50, vorzugsweise 99 bis 70 Gew.-%, aus oben für das Homopolymer definierten Olefineinheiten mit einem Isotaxieindex von mindestens 85 % und zu 0,5 bis 50, vorzugsweise 1 bis 30 Gew.-%, aus Einheiten von Ethylen und/oder einem weiteren Olefin obiger Definition als Comonomer. Das Comonomer ist statistisch mit hoher Regelmäßigkeit eingebaut. Bevorzugte Comonomere sind Ethylen, Buten-1, 4-Methyl-1-penten, Hexen-1, Norbornen oder Penten. Besonders bevorzugte Olefincopolymere bestehen aus Propyleneinheiten und aus Ethylen-Comonomereinheiten.

Besteht das Polyolefin aus einem Gemisch aus Olefinhomopolymer und Olefincopolymer, so hat das Olefinhomopolymer die oben beschriebene Zusammensetzung. Das Olefincopolymer besteht zu 20 bis 90 Gew.-%, bevorzugt 40 bis 90 Gew.-%, aus einem Olefin, wie es oben für das Olefinhomopolymer definiert ist, und 80 bis 10 Gew.-%, bevorzugt 60 bis 10 Gew.-%, aus Einheiten von Ethylen und/oder mindestens einem Olefin, wie es obenstehend für ein Olefincopolymer definiert ist. Das Comonomer wird bevorzugt statistisch eingebaut. Der Anteil des Olefinhomopolymeren an der gesamten Polyolefinmasse beträgt in diesem Fall 20 bis 99 Gew.-%, vorzugsweise 40 bis 95 Gew.-%, der Anteil an Olefincopolymer beträgt 80 bis 1 Gew.-%, bevorzugt 60 bis 5 Gew.-%.

Besonders bevorzugt setzt sich das erfindungsgemäße Polyolefin, wenn es aus zwei verschiedenen Polymerkomponenten besteht, aus 40 bis 95 Gew.-% Polypropylen (bezogen auf die Gesamtmenge Polyolefin) mit einem Isotaxieindex von mindestens 85 % und 60 bis 5 Gew.-% (bezogen auf die Gesamtmenge Polyolefin) Olefincopolymer, bestehend aus 40 bis 90 Gew.-% Propyleneinheiten und 60 bis 10 Gew.-% Ethyleneinheiten (jeweils bezogen auf die Gesamtmenge Olefincopolymer), zusammen.

Das isotaktische Olefinpolymer ist in der erfindungsgemäßen Formmasse in einer Menge von 20 bis 99 Gew.-%, vorzugsweise 40 bis 95 Gew.-% enthalten.

1 bis 80, vorzugsweise 5 bis 60 Gew.-% der erfindungsgemäßen Formmasse sind ein Kautschuk mit einer Glastemperatur unter -20°C. Geeignete Kautschuke sind beispielsweise Styrol-Butadien-Kautschuke, Silikonkautschuke, Ethylen-Propylen-Kautschuke (EPM) oder Ethylen-Propylen-Dien-Kautschuke (EPDM). EPM- und EPDM-Kautschuke können zusätzlich noch bis zu 40 % Polyethylen enthalten. Als Dien-Komponente kann 1,4-Hexadien, Norbornadien oder Cyclopentadien in einer Menge bis zu 10 Gew.-%, bezogen auf die Gesamtkautschukmenge, enthalten sein.

Der Gehalt an Ethylen und Propylen ist nicht begrenzt, solange eine Glastemperatur der amorphen Komponente von weniger als -20° C erreicht wird.

Eine typische Zusammensetzung für handelsübliche EPM-Kautschuke ist beispielsweise 10-60 % Propyleneinheiten und 90 - 40 Gew.-% Ethyleneinheiten. Von den Ethyleneinheiten entfallen dabei 0 - 40 Gew.-% auf einen reinen Polyethylenanteil, der Rest bildet zusammen mit dem Propylen den Copolymeranteil.

Entsprechend zusammengesetzt sind EPDM-Kautschuke, im Copolymeranteil sind neben Propylen und Ethylen jedoch zusätzlich noch 1 - 10 Gew.-% eines Diens vom oben erwähnten Typ eingebaut. Die Schmelzviskosität typischer EPM- und EPDM-Kautschuke liegt zwischen 0,5 und 300 g/10 min (MFI 230/5).

Die Mooney-Viskosität (gemessen bei 121 °C, ML) liegt typisch zwischen 20 und 80. Die Streckspannung bei 60 % Dehnung beträgt typisch 10-300 psi (pound/sq inch, 1 psi = 6894,8 kg/m.sec² = 1 Pa).

Typisch verwendbare Kautschuke sind beispielsweise unter den zur Zeit bestehenden Handelsnamen Vistalon, Exxelor (Exxon Chemicals), Dutral (Dutral S.A.), Nordel (DuPont) oder Buna (Veba) auf dem Markt.

Außer dem isotaktischen Olefinpolymer und dem Kautschuk kann die erfindungsgemäße Formmasse noch die üblichen Zusatzstoffe enthalten, beispielsweise Stabilisatoren, Antioxidantien, UV-Absorber, Lichtschutzmittel, Metalldesaktivatoren, Radikalfänger, Füllstoffe und Verstärkungsmittel, Compatibilizer, Weichmacher, Gleitmittel, Emulgatoren, Pigmente, optische Aufheller, Flammschutzmittel, Antistatika, Treibmittel.

Die Herstellung der erfindungsgemäßen Formmasse kann nach den in der Kunststoffverarbeitung für das Mischen von Polymeren und Zusatzstoffen üblichen Methoden erfolgen.

Eine Möglichkeit ist das Sintern in einem schnellaufenden Mischer, wenn alle Bestandteile der Formmasse pulverförmig sind.

Ein weitere Möglichkeit ist der Einsatz eines Extruders mit Misch- und Knetorganen auf der Schnecke.

Schließlich sind auch Kneter, wie sie in der Gummi- und Kautschukindustrie eingesetzt werden, geeignete Mischmaschinen.

Die Mischtemperatur ist abhängig von der jeweiligen Zusammensetzung der Formmasse und läßt sich durch einfache Routineversuche ermitteln.

Die erfindungsgemäße Formmasse zeichnet sich durch hohe Härte in Kombination mit hoher Schlagzähigkeit, insbesondere auch bei Temperaturen unter 0°C, aus. Generell ist diese Formmasse in Form von extrudierten, gespritzten, geschäumten oder geblasenen Formkörpern überall dort verwendbar, wo hohe Steifigkeit, Härte, Maßhaltigkeit und Kratzfestigkeit in Kombination mit hoher Schlagzähigkeit, Reiß- und Biegefestigkeit erwünscht ist.

Im Automobilbau ist sie beispielsweise für Seitenschutzleisten, Spoiler, Dichtungen, Kotflügelauskleidungen, Stoßfängerwerkstoffe, LKW- und Traktorenkotflügel, kratzfeste KFZ-Innenausstattung oder Radkappen einsetzbar.

Ferner eignet sich die erfindungsgemäße Formmasse beispielsweise auch zur Herstellung von reißfesten Folien, Membranfiltern, Fasern und Filamenten.

Die folgenden Beispiele sollen die Erfindung näher erläutern.
- II =: Isotaxie-Index (durch ¹³C-NMR Spektroskopie).
- nᵢₛₒ =: Mittlere isotaktische Kettenlänge (durch ¹³C-NMR).
- n_{PE} =: Mittlere Blocklänge Polyethylen.
- VZ =: Viskositätszahl gemessen bei 135° C als 0,1 %ige Lösung in Decahydronaphthalin im Kapillarviskosimeter.
- MFI 230/5 =: Schmelzindex bei 230° C, 5 kg Belastung, nach DIN 53 735
- M_{w}/Mₙ=: Polydispersität (Maß für die Kettenlängenverteilung)
Bestimmung der Schmelzpunkte mit DSC (20° C/min)
- KDH =: Kugeldruckhärte (in Anlehnung an DIN 53 456, 4 mm dicke Preßplatten)
- aₖᵥ =: Kerbschlagzähigkeit nach DIN 53 453, gemessen an Preßplatten entnommenen Normkleinstäben (50 x 6 x 4 mm) mit V-Kerbe (Flankenwinkel 45°, Kerbtiefe 1,3 mm, Kerbradius 1 mm).

Für die Herstellung der Formmassen wurde ein Doppelschneckenextruder ZSK 28 (Fa. Werner & Pfleiderer) verwendet.

### Beispiel 1

Durch Extrusion wurde eine Formmasse hergestellt, bestehend aus 90 Gew.-% isotaktischem Polypropylen, bezogen auf die gesamte Formmasse, und 10 Gew.-% eines Kautschuks folgender Zusammensetzung:
35,8 Gew.-% Propyleneinheiten und 64,2 Gew.-% Ethyleneinheiten; 40,4 Gew.-% der Kautschukmasse war Polyethylen und 59,6 Gew.-% ein Ethylen-Propylen-Copolymer (EPM) bestehend aus 60,0 Gew.-% Propyleneinheiten und 40,0 Gew.-% Ethyleneinheiten. Der MFI 230/5 des Kautschuks betrug 2 g/10 min, die Viskositätszahl (VZ) 236 cm³/g, der DSC-Schmelzpunkt 131° C und die DSC-Glastemperatur -56° C. Das verwendete isotaktische Polypropylen hatte einen Isotaktischen Index (II) von 96,0 %, ein nᵢₛₒ von 49, einen MFI 230/5 von 32 g/10 min, einen Schmelzpunkt von 148° C; weitere Daten waren: M_{w} = 190 000 g/mol; M_{w}/Mₙ = 2,2, VZ = 174 cm³/g, keine Ether- oder Heptan-extrahierbaren APO-Anteile.

9 kg des isotaktischen Polypropylenpulvers wurden mit 1 kg des Kautschuks gemischt und die Mischung mit 10 g Pentaerithrityl-tetrakis[3(3,5-di-t-butyl-4-hydroxyphenyl)propionat] gegen chemischen Abbau unter Extrusionsbedingungen stabilisiert. In den fünf Heizzonen des Extruders wurden 120° C (Einzug), 150° C, 190° C, 185° C und 180° C (Düsenplatte) eingestellt. Die Extruderschnecke wurde mit 300 Upm. betrieben; die Massetemperatur der Mischung im Extruder betrug 210° C.

An der so hergestellten Formmasse wurden folgende Daten gemessen:
MFI (230/5) = 31 g/10 min; VZ = 168 cm³/g;
KDH = 70 Nmm⁻²; a_{Kv} = 10,1 mJmm⁻² (23° C);
5,4 mJmm⁻² (0° C) und 4,3 mJmm⁻² (-20° C).
Schmelzpunkt (DSC) = 128 und 148° C, Glastemperatur Tg = -56° C.

### Vergleichsbeispiel A

Unter den gleichen Bedingungen wie in Beispiel 1 wurde statt des erfindungsgemäßen APO-freien (hier APP-freien; APP= ataktisches Polypropylen), engverteilten isotaktischen Polypropylens ein Polypropylen mit folgenden Daten eingesetzt:
MFI (230/5) = 27 g/10 min; VZ = 220 cm³/g; M_{w}= 312 000 g/mol, M_{w}/Mₙ = 8,5;
APP-Gehalt durch Heptan-Extraktion : 2,3 Gew.-%.

Die so erhaltene Formmasse wies folgende Daten auf:
MFI (230/5) = 24 g/10 min; VZ = 245 cm³/g;
KDH ..... Nmm²; a_{Kv} = ...... mJmm⁻².
Schmelzpunkt (DSC) = 128/164° C, Glastemperatur Tg = -56° C.

### Beispiele 2 - 4; Vergleichsbeispiele B - D

Es wurde verfahren wie in Beispiel 1 (Bsp. 2 - 4) bzw. wie in Vergleichsbeispiel A (Vergleichsbeispiele B - D), statt 10 % Kautschuk wurden jedoch 15 % (Bsp. 2; Vergl.bsp. B), 25 % (Bsp. 3, Vergl.bsp. C) und 40 % (Bsp. 4, Vergl.bsp. D) Kautschuk eingesetzt.

Die Ergebnisse sind in Tabelle 1 zusammengefaßt.

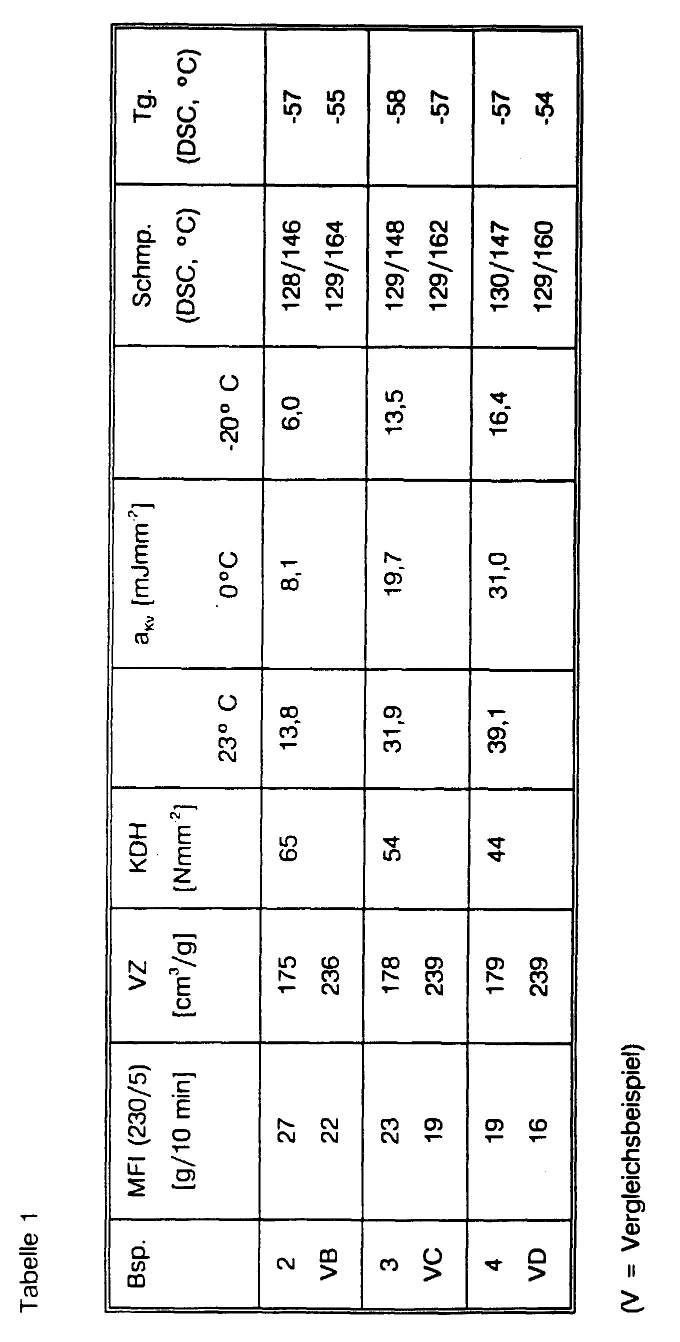

### Beispiele 5 - 8

Die Beispiele 1 - 4 wurden wiederholt, als erfindungsgemäßes Polypropylen wurde jedoch ein Produkt mit folgenden Daten verwendet:
II = 96,1 %; nᵢₛₒ = 53; MFI (230/5) = 4 g/10 min; Schmelzpunkt = 151° C, M_{w} = 369500, M_{w}/Mₙ = 2,0; VZ = 293 cm³/g; keine Ether- oder Heptan-extrahierbaren APP-Anteile.

Dieses Polypropylen wurde mit 10 Gew.-% (Bsp. 5), 15 Gew.-% (Bsp. 6), 25 Gew.-% (Bsp. 7) und 40 Gew.-% (Bsp. 8) des Kautschuks durch Extrusion zu Formmassen mit den in Tabelle 2 zusammengestellten Daten verarbeitet.

### Vergleichsbeispiele E - H

Es wurde verfahren wie in den Beispielen 5 bis 8, verwendet wurde jedoch ein nicht erfindungsgemäßes Polypropylen mit folgenden Daten:
MFI (230/5) = 9 g/10 min; VZ = 302 cm³/g;
M_{w} = 288 000 g/mol; M_{w}/Mₙ = 5,7; APP durch Heptan-Extraktion: 2,7 Gew.-%.

Die so erhaltenen Formmassen VE (10 %), VF (15 %), VG (25 %) und VH mit 40 % Kautschukgehalt wiesen die in Tabelle 2 zusammengestellten Daten auf.

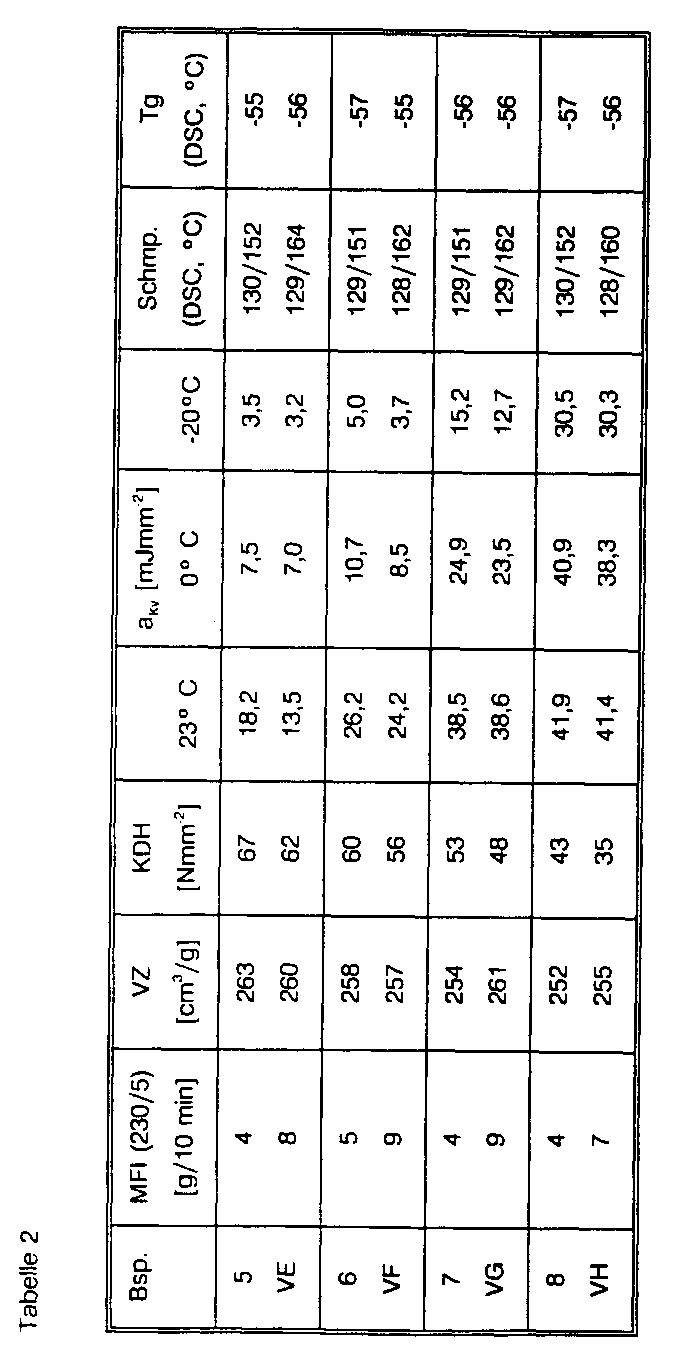

### Beispiel 9

Beispiel 3 wurde wiederholt, als erfindungsgemäßes Polypropylen wurde jedoch ein Produkt mit folgenden Daten verwendet:
II = 96,4 %, nᵢₛₒ = 60; MFI (230/5) = 100 g/10 min;
Schmelzpunkt = 148° C, M_{w} = 154500 g/mol, M_{w}/Mₙ = 2,2;
VZ = 146 cm³/g; keine Ether- oder Heptan-extrahierbaren APP-Anteile.

An der durch Extrusion mit dem Kautschuk hergestellten Formmasse wurden folgende Daten gemessen:
MFI (230/5) = 79 dg/min; VZ = 170 cm³/g;
KDH = 72 Nmm⁻²; a_{Kv} = 28,6 (23° C), 17,5 (0° C) und 8,7 mJmm⁻² (-20° C).

### Beispiel 10

Beispiel 3 wurde wiederholt, als erfindungsgemäßes Polyolefin wurde jedoch ein Ethylen-Propylen-Copolymer folgender Zusammensetzung und Eigenschaften verwendet:
Ethylengehalt 4,3 %, Ethyleneinbau mit einer mittleren Ethylenblocklänge von n_{PE}≤1,2, das bedeutet, daß der überwiegende Ethylenanteil isoliert eingebaut ist.
Der II der Propylensequenzen betrug 96,8 %.
MFI (230/5) = 7,0 g/10 min; VZ 289 cm³/g;
M_{w} = 402 000 g/mol, M_{w}/Mₙ = 2,0.
Keine Ether- oder Heptan-extrahierbaren APP-Anteile.

An der durch Extrusion mit dem Kautschuk hergestellten Formmasse wurden folgende Daten gemessen:
MFI (230/5) = 3,5 g/10 min; VZ = 272 cm³/g;
KDH = 50 Nmm⁻²; a_{Kv} = 45,7 (23° C), 27,9 (0° C) und 18,4 mJmm⁻² (-20° C).

### Beispiel 11

Beispiel 3 wurde wiederholt, als erfindungsgemäßes Polyolefin wurde jedoch ein zweistufig hergestelltes Ethylen-Propylen-Blockcopolymer verwendet, das folgende Zusammensetzung und Eigenschaften aufwies:
12,5 % Ethylengehalt; die Fraktionierung des Copolymers ergab eine Zusammensetzung von 76 % Polypropylen mit einem II von 96,8 % und 24 % eines Ethylen-Propylen-Copolymers mit 52 % Ethylengehalt, wobei das Ethylen sowohl isoliert, als auch blockartig eingebaut war.
MFI (230/5) = 4,9 g/10 min; VZ = 326 cm³/g;
M_{w} = 407000 g/mol, M_{w}/Mₙ = 3,1.
Keine Ether- oder Heptan-extrahierbaren APP-Anteile.

An der durch Extrusion mit dem Kautschuk hergestellten Formmasse wurden folgende Daten gemessen:
MFI (230/5) = 3,4 g/10 min; VZ = 298 cm³/g;
KDH = 39 Nmm⁻²; a_{Kv} : keine Brüche des Probekörpers bis -40° C.

## Patentansprüche

1. Polyolefinformmasse, im wesentlichen bestehend aus 20 bis 99 Gew.-%, bezogen auf die Formmasse, eines isotaktischen Polyolefins mit einem Isotaxieindex von mindestens 85 % ist, das keine ataktischen Polymerketten enthält, und eine Molmassenverteilung M_{w}/Mₙ < 5 aufweist und 1 bis 80 Gew.-%, bezogen auf die Formmasse, eines Kautschuks mit einer Glastemperatur unter -20°C.

2. Formmasse nach Anspruch 1, wobei das
isotaktische Polyolefin ein Olefinhomopolymer ist und aus Einheiten eines Olefins mit mindestens 3 C-Atomen der Formel R^{a}-CH=CH-R^{b} besteht, worin R^{a} und R^{b} gleich oder verschieden sind und ein Wasserstoffatom oder C₁-C₁₀-Alkyl bedeuten oder R^{a} und R^{b} mit den sie verbindenden Atomen einen Ring mit 4 bis 22 C-Atomen bilden.

3. Formmasse nach Anspruch 1 oder 2, wobei das isotaktische Polyolefin Polypropylen ist.

4. Formmasse nach Anspruch 1, wobei das
isotaktische Polyolefin ein Olefincopolymer ist, welches zu 99,5 bis 50 Gew.-% aus Einheiten eines Olefins mit mindestens 3 C-Atomen der Formel R^{a}-CH=CH-R^{b}, worin R^{a} und R^{b} gleich oder verschieden sind und ein Wasserstoffatom oder C₁-C₁₀-Alkyl bedeuten oder R^{a} und R^{b} mit den sie verbindenden Atomen einen Ring mit 4 bis 22 C-Atomen bilden, mit einem Isotaxieindex von mindestens 85 % und zu 0,5 bis 50 Gew.-% aus Einheiten von Ethylen und/oder einem Olefin der Formel R^{a}-CH=CH-R^{b} besteht.

5. Formmasse nach Anspruch 4, wobei das Olefincopolymer ein Ethylen/Propylen-Copolymer ist.

6. Formmasse nach Anspruch 1, wobei das isotaktische Polyolefin ein Gemisch ist aus
a) 20 bis 99 Gew.% eines-Olefinhomopolymers, welches aus Einheiten eines Olefins mit mindestens 3 C-Atomen der Formel R^{a}-CH=CH-R^{b} besteht, worin R^{a} und R^{b} gleich oder verschieden sind und ein Wasserstoffatom oder C₁-C₁₀-Alkyl bedeuten oder R^{a} und R^{b} mit den sie verbindenden Atomen einen Ring mit 4 bis 22 C-Atomen bilden, mit einem Isotaxieindex von mindestens 85 % und
b) 80 bis 1 Gew.-% eines Olefincopolymers, welches zu 20 bis 90 Gew.-% aus Einheiten eines Olefins mit mindestens 3 C-Atomen der Formel R^{a}-CH=CH-R^{b}, worin R^{a} und R^{b} gleich oder verschieden sind und ein Wasserstoffatom oder C₁-C₁₀-Alkyl bedeuten oder R^{a} und R^{b} mit den sie verbindenden Atomen einen Ring mit 4 bis 22 C-Atomen bilden, mit einem Isotaxieindex von mindestens 85 % und zu 80 bis 10 Gew.-% aus Einheiten von Ethylen und/oder einem weiteren Olefin der Formel R^{a}-CH=CH-R^{b} besteht.

7. Formmasse nach einem oder mehreren der Ansprüche 1 bis 6, wobei sie zusätzlich Stabilisatoren, Antioxidantien , UV-Absorber Lichtschutzmittel, Metalldesaktivatoren, Radikalfänger, Füllstoffe und Verstärkungsmittel, Compatibilizer, Weichmacher, Gleitmittel, Emulgatoren, Pigmente, optische Aufheller, Flammschutzmittel, Antistatika oder Treibmittel enthält.

8. Verfahren zur Herstellung einer Formmasse nach einem oder mehreren der Ansprüche 1 bis 7, wobei die Bestandteile in einem schnellaufenden Mischer gesintert oder in einem Extruder mit Misch- und Knetorganen auf der Schnecke gemischt werden.

9. Verwendung einer Formmasse nach einem oder mehreren der Ansprüche 1 bis 7 zur Herstellung von Formkörpern.

10. Formkörper, herstellbar aus einer Formmasse nach einem oder mehreren der Ansprüche 1 bis 7.

## Claims

1. A polyolefin molding composition essentially comprising 20 to 99% by weight, based on the molding composition, of an isotactic polyolefin having an isotacticity index of at least 85% which contains no atactic polymer chains and has a molecular weight distribution M_{w}/Mₙ of < 5, and 1 to 80% by weight, based on the molding composition, of a rubber having a glass transition temperature below -20°C.

2. A molding composition as claimed in claim 1, wherein the isotactic polyolefin is an olefin homopolymer and comprises units of an olefin having at least 3 carbon atoms, of the formula R^{a}-CH=CH-R^{b}, in which R^{a} and R^{b} are identical or different and are a hydrogen atom or C₁-C₁₀-alkyl, or R^{a} and R^{b}, with the atoms joining them, form a ring having 4 to 22 carbon atoms.

3. A molding composition as claimed in claim 1 or 2, wherein the isotactic polyolefin is polypropylene.

4. A molding composition as claimed in claim 1, wherein the isotactic polyolefin is an olefin copolymer which comprises units of an olefin having at least 3 carbon atoms, of the formula R^{a}-CH=CH-R^{b}, in which R^{a} and R^{b} are identical or different and are a hydrogen atom or C₁-C₁₀-alkyl, or R^{a} and R^{b}, with the atoms joining them, form a ring having 4 to 22 carbon atoms, and having an isotacticity index of at least 85% to the extent of 99.5 to 50% by weight, and units of ethylene and/or an olefin of the formula R^{a}-CH=CH-R^{b} to the extent of 0.5 to 50% by weight.

5. A molding composition as claimed in claim 4, wherein the olefin copolymer is an ethylene/propylene copolymer.

6. A molding composition as claimed in claim 1, wherein the isotactic polyolefin is a mixture of
a) 20 to 99% by weight of an olefin homopolymer which comprises units of an olefin having at least 3 carbon atoms, of the formula R^{a}-CH=CH-R^{b}, in which R^{a} and R^{b} are identical or different and are a hydrogen atom or C₁-C₁₀-alkyl, or R^{a} and R^{b}, with the atoms joining them, form a ring having 4 to 22 carbon atoms, and having an isotacticity index of at least 85%
and
b) 80 to 1% by weight of an olefin copolymer which comprises units of an olefin having at least 3 carbon atoms, of the formula R^{a}-CH=CH-R^{b}, in which R^{a} and R^{b} are identical or different and are a hydrogen atom or C₁-C₁₀-alkyl, or R^{a} and R^{b}, with the atoms joining them, form a ring having 4 to 22 carbon atoms, and having an isotacticity index of at least 85% to the extent of 20 to 90% by weight, and units of ethylene and/or another olefin of the formula R^{a}-CH=CH-R^{b} to the extent of 80 to 10% by weight.

7. A molding composition as claimed in one or more of claims 1 to 6, which additionally comprises stabilizers, antioxidants, UV absorbers, light stabilizers, metal deactivators, free radical trapping agents, fillers and reinforcing agents, compatibilizing agents, plasticizers, lubricants, emulsifiers, pigments, optical brighteners, flameproofing agents, antistatics or blowing agents.

8. A process for the preparation of a molding composition as claimed in one or more of claims 1 to 7, wherein the constituents are sintered in a high-speed mixer or mixed in an extruder having mixing and kneadind organs on the screw.

9. The use of a molding composition as claimed in one or more of claims 1 to 7 for the production of moldings.

10. A molding which can be produced from a molding composition as claimed in one or more of claims 1 to 7.

## Revendications

1. Matière à mouler polyoléfinique, constituée essentiellement de 20 à 99 % en poids par rapport à la matière à mouler, d'une polyoléfine isotactique avec un indice isotactique d'au moins 85 %, qui ne contient pas de chaînes polymères atactiques, et qui présente une distribution de la masse molaire M_{w}/Mₙ <5 et de 1 à 80 % en poids, par rapport à la matière à mouler, d'un caoutchouc avec une température de transition vitreuse inférieure à -20 °C.

2. Matière à mouler selon la revendication 1, la polyoléfine isotactique étant un homopolymère oléfinique et constituée à partir d'unités d'une oléfine avec au moins 3 atomes de carbone de formule R^{a}-CH=CH-R^{b}, où R^{a} et R^{b} sont identiques ou différents et représentent un atome d'hydrogène ou un alkyle en C₁-C₁₀, ou bien R^{a} et R^{b} forment, avec les atomes qui les relient, un cycle avec 4 à 22 atomes de carbone.

3. Matière à mouler selon la revendication 1 ou 2, la polyoléfine isotactique étant du polypropylène.

4. Matière à mouler selon la revendication 1, la polyoléfine isotactique étant un copolymère oléfinique, lequel est constitué de 99,5 à 50 % en poids d'unités d'une oléfine avec au moins 3 atomes de carbone de formule R^{a}-CH=CH-R^{b}, où R^{a} et R^{b} sont identiques ou différents et représentent un atome d'hydrogène ou un groupe alkyle en C₁-C₁₀, ou bien R^{a} et R^{b} forment, avec les atomes qui les relient, un cycle avec 4 à 22 atomes de carbone, avec un indice isotactique d'au moins 85 % et de 0,5 à 50 % en poids d'unité d'éthylène et/ou d'une oléfine de formule R^{a}-CH=CH-R^{b}.

5. Matière à mouler selon la revendication 4, le copolymère oléfinique étant un copolymère d'éthylène/ propylène.

6. Matière à mouler selon la revendication 1, la polyoléfine isotactique étant un mélange
a) de 20 à 99 % en poids d'un homopolymère d'oléfine, lequel est constitué d'unités d'une oléfine avec au moins 3 atomes de carbone de formule R^{a}-CH=CH-R^{b}, où R^{a} et R^{b} sont identiques ou différents et représentent un atome d'hydrogène ou un groupe alkyle en C₁-C₁₀, ou bien R^{a} et R^{b} forment avec les atomes qui les relient un cycle avec 4 à 22 atomes de carbone, avec un indice isotactique d'au moins de 85 %,
et
b) de 80 à 1 % en poids d'un copolymère oléfinique, lequel est constitué de 20 à 90 % en poids d'unités d'une oléfine avec au moins 3 atomes de carbone de formule R^{a}-CH=CH-R^{b}, où R^{a} et R^{b} sont identiques ou différents et représentent un atome d'hydrogène ou un groupe alkyle en C₁-C₁₀, ou bien R^{a} et R^{b} forment, avec les atomes qui les relient, un cycle avec 4 à 22 atomes de carbone, avec un indice isotactique d'au moins 85 % et de 80 à 10 % en poids d'unités d'éthylène et/ou d'une autre oléfine de formule R^{a}-CH=CH-R^{b}.

7. Matière à mouler selon une ou plusieurs des revendications 1 à 6, contenant en plus des stabilisants, des antioxydants, des absorbeurs d'UV, des agents photoprotecteurs, des désactivateurs de métaux, des pièges de radicaux, des charges et des agents de renforcement, des agents de compatibilité, des plastifiants, des agents de démoulage, des émulsifiants, des pigments, des azurants optiques, des agents ignifugeants, des antistatiques ou des agents porogènes.

8. Procédé de préparation d'une matière à mouler selon une ou plusieurs des revendications 1 à 7, les constituants étant agglomérés dans un mélangeur rapide ou mélangés dans une extrudeuse avec des organes de mélange ou de malaxage montés sur la vis.

9. Utilisation d'une matière à mouler selon une ou plusieurs des revendications 1 à 7, pour la préparation de corps moulés.

10. Corps moulés, que l'on peut préparer à partir d'une matière à mouler selon une ou plusieurs des revendications 1 à 7.
